# EUROPEAN PATENT SPECIFICATION

(11) **EP 3 616 359 B1**
(45) Date of publication and mention of the grant of the patent: **12.07.2023**
(21) Application number: 18791760.4
(22) Date of filing: 09.04.2018
(51) Int. Cl.: H04L 9/32, G06F 15/16, G06F 21/00, G06K 5/00, H04W 12/06, G06F 15/76, G06Q 20/30, G06F 21/44, H04L 9/08, H04L 9/40

(54) **SYSTEM AND METHOD FOR IOT DEVICE AUTHENTICATION AND SECURE TRANSACTION AUTHORIZATION**
SYSTEM UND VERFAHREN ZUR AUTHENTIFIZIERUNG EINER IOT-VORRICHTUNG UND AUTORISIERUNG EINER SICHEREN TRANSAKTION
SYSTÈME ET PROCÉDÉ D'AUTHENTIFICATION DE DISPOSITIF IDO ET D'AUTORISATION DE TRANSACTION SÉCURISÉE

(30) Priority: 25.04.2017 US 201762489562 P
(43) Date of publication of application: 04.03.2020
(73) Proprietor: IX-Den Ltd., 7534410 Rishon LeZion (IL)
(72) Inventor: COOPERMAN, Leonid, 75321 Rishon LeZion (IL)
(74) Representative: Studio Torta S.p.A.
(86) International application number: PCT/IL2018/050407
(87) International publication number: WO 2018/198110

(56) References cited:
- WO-A1-2015/127256
- US-A1- 2005 125 407
- US-A1- 2009 240 941
- US-A1- 2012 030 740
- US-A1- 2012 234 908
- US-A1- 2015 120 560
- US-A1- 2015 310 444
- US-A1- 2016 191 541
- US-A1- 2016 248 771
- US-A1- 2017 111 340
- US-B1- 9 602 279
- SIGNORINI Matteo: "Towards an internet of trust: issues and solutions for identification and authentication in the internet of things", Universitat Pompeu Fabra, Departament de Tecnologies de la Informació i les Comunicacions , 10 December 2015 (2015-12-10), pages 1-204, XP055647644, Retrieved from the Internet: URL:https://www.tdx.cat/handle/10803/35002 9

## Description

### TECHNICAL FIELD

The presently disclosed subject matter relates to the area of Computer Security, and more specifically to identification of connected devices, such as Internet of Things (IoT) devices (also referred to herein as "devices" or "Things" interchangeably), Authentication of IoT Devices and Authorization of Transactions initiated by an IoT Device or involving an IoT Device as a participant.

### BACKGROUND

The simplicity of IoT Devices dictated by cost and compatibility concerns, gives rise to new Cyber-security challenges in the design of protected, hack-safe systems. Affected areas include banking and financial systems, industry, manufacturing, agriculture, medicine, transport and many more. Billions of basic "Things" possessing rudimentary computing capabilities and lacking of built-in security mechanisms are easy targets to sophisticated predators. The ground is ripe for massive attacks on payment transactions, industrial processes, theft of sensitive business data, information gathering and eavesdropping as well as new, yet unknown types of scams.

These attacks will become more and more devastating as loT Devices graduate from measuring and transmitting collected information into participating in core functions of making decisions and performing actions without any human intervention. Examples include initiation of financial transactions (e.g. payments initiated by wearable devices, home appliances or connected cars), critical infrastructure systems, commands and actions performed by autonomous robotic equipment (cars, trucks, tractors etc.), controlling or tuning of industrial manufacturing equipment, or fateful decisions made by (semi-) autonomous medical devices such as heart pacemakers or insulin pumps.

The cornerstone of securing computer communications is amply strong Authentication of participating parties, based on their Identity and rigorous management of Transaction Authorization.

Existing non-autonomous Authentication process in Human to Machine communication is typically based on Human Identity and using human-oriented credentials defined as "*What I have* / *What I know* / *What I'm*". This occurs for example during Credit Card authorization or authorized logging in to any application or internet site. The process requires direct involvement of Human (Persona) in the transaction initiation and authorization. Multi-factor authentication essentially requires Human intervention as well.

From the other side, Authentication of participating parties in Machine to Machine (M2M) secure communication between two Devices is based on keys, tokens or other secure elements. The underlying assumption is that these secure elements on both communicating sides are protected as they are residing in special non-volatile memory, strongly encrypted, one-time or frequently changing etc. This assumption is carried out (to some extent) in domains of computers servers, personal computing, cellular phones etc. However, this is barely correct for IoT Devices due to their severe limitations. Pre-loading the Device with whole information comprising its Identity (including tokens, encryption keys etc.) is extremely insecure. Using metaphor from Human to Machine communication, one can say that this degrades the security to the easiest to breach *What I have* level.

The underlying communication technology of IoT Devices is based on existing computer network protocols of different levels such as HTTP(s), FTP(s), WiFi or protocols adjusted to IoT needs (low power consumption etc.) such as 6LowPan, LoRaWan, LTE-M, BLE, MQTT etc. Those protocols aren't implying strong Device authentication mechanisms and in fact weren't successful in prevention of majority of today's cyber-attacks.

New IoT world requires mechanism for strong IoT Device Authentication and secure, Authorized Transactions involving these devices or even initiated by IoT devices themselves, bypassing these devices' inherent security weakness.

Document WO 2015127256 A1 relates to continuous authentication of a user of a mobile device.

### GENERAL DESCRIPTION

The invention is defined by claims 1, 8 and 15.

New IoT Device Authentication and Secure Transaction Authorization System and Method. Device Authentication and Transaction Authorization can be performed in unattended mode.

The presently disclosed subject matter comprises solution bringing equivalent of Human Identity *"What I know"* into Machine to Machine (M2M) communication by establishing elaborated and strong Device Identity.

Authentication process based on novel, dynamic Device Identity comprised from a set of parameters related to surrounding physical environment as it can be discovered by the Device using its own sensors, its network neighborhood as known to the device and information describing the Device itself.

As such, the presently disclosed subject matter is making a novel use of inherent features every IoT Device is equipped with - its ability to measure physical parameters of the surrounding real world as well as its ability to intercommunicate with the surroundings via built-in (into the device) one or another type of network communication technology.

Device Identity is not stored on the Device itself but rather re-generated per transaction.

Device Identity is known in advance to Central Agency responsible for serving Authentication requests and Authorizing transactions.

IoT Device can't initiate its Authentication by declaring its Identity. The Device Authentication can be initiated by Central Agency only.

Authentication is built as Dynamic challenge/response process. Different unpredictable challenge arc issued by Central Agency each time. Dissimilar information comprising Device Identity (targeted, randomized subset of parameters) should be produced by IoT Device in order to respond to each challenge (equivalent of "security questions" in Human Authentication).

The decision on Authentication provided in form of Authentication Grade, which reflects reliability of the Device Authentication, The Grade can be calculated by a Matching Algorithm. This Algorithm compares between full original Device Identity created during a one-time Contract (binding) process and the subset Device Identity received as a response to dynamic Authentication challenge. The Algorithm can use for comparison its own metric space, as well as methods of statistical analysis, machine learning and Artificial Intelligence.

The presently disclosed subject matter is compatible with majority of IoT Device types and Device networks.

The presently disclosed subject matter is independent of IoT Device vendor.

The presently disclosed subject matter does not require any special Hardware apart from IoT device itself.

Most of IoT devices (because of their cost, limited battery power or other constrains) have limited computing capabilities and are not equipped with strong hardware-based security features. The presently disclosed subject matter allows to secure transactions on such devices as well.

From the other side, the presently disclosed subject matter allows to take significant advantage from security-related features of specific Hardware and Software platforms (if available), such as ARM's *mbed* platform, TPM modules or others, making Authentication and Authorization even more secure.

The presently disclosed subject matter can be used in adjustment to standard security credentials (e.g. User/Password, Credit Card info, Fingerprint info etc.) to provide much stronger security identity equivalent to two- or multi- factor authentication.

In this situation, the presently disclosed subject matter can be used for stronger Authentication and improved Transaction Authorization for devices that aren't classified today as IoT devices, such as Cell Phones, Tablets and other Mobile Devices, etc.

In accordance with a first aspect of the presently disclosed subject matter, there is provided a network-connected device authentication system, the network-connected device authentication system comprising a processing resource configured to: provide a contracts database comprising a plurality of authentication-enabling information records, each authentication-enabling information record containing a network access descriptor of a respective network-connected device and reference values of respective authentication parameters of the respective network-connected device; obtain, from a requestor, an authentication request including a given network access descriptor associated with a given network-connected device to be authenticated; retrieve, from the given network-connected device, utilizing the given network access descriptor, a plurality of authentication values obtained by reading current values of the respective authentication parameters of the given network-connected device, wherein one or more given authentication parameters of the authentication parameters a dynamic value that changes over time; calculate an authentication grade indicative of authenticity of the given network-connected device by comparing each of the authentication values with a respective expected value, or expected value range, or a group of expected values, determined utilizing the respective reference values; and send, to the requestor, an authentication reply.

In some cases, the authentication reply includes the authentication grade.

In some cases, the authentication request is a request for authorization of a transaction involving the given network-connected device and wherein the authentication reply indicates authorization of the transaction upon determining that the grade is above a threshold.

In some cases, the authentication request is a request for authorization of a transaction involving the given network-connected device and wherein the authentication reply indicates the transaction as unauthorized upon determining that the grade is below a threshold.

In some cases, the processing resource is further configured to generate the given authentication-enabling information record by performing a contract creation process, during which the reference values are obtained by reading the current values of the respective authentication parameters of the given network-connected device.

In some cases, at least one given authentication parameter of the given authentication parameters has a corresponding expected value and wherein the comparing includes a comparison between the authentication value of the at least one given authentication parameter and the corresponding expected value of the at least one given authentication parameter.

In some cases, the corresponding expected value does not change over time.

In some cases, the corresponding expected value changes over time.

In some cases, the corresponding expected value is calculated based on one or more expected value determination rules.

In some cases, the reference values of the given authentication parameter include a plurality of readings obtained in response to a plurality of past retrievals from the given network-connected device, and wherein the corresponding expected value is calculated based on a plurality of the reference values of the given authentication parameter.

In some cases, at least one given authentication parameter of the given authentication parameters has a respective expected value range and wherein the comparing includes a comparison between the authentication value of the at least one given authentication parameter and the corresponding expected value range of the at least one given authentication parameter.

In some cases, the corresponding expected value range does not change over time.

In some cases, the corresponding expected value range changes over time.

In some cases, the corresponding expected value range is calculated based on one or more expected value determination rules.

In some cases, the reference values of the given authentication parameter include a plurality of readings obtained in response to a plurality of past retrievals from the given network-connected device, and wherein the corresponding expected value range is calculated based on a plurality of the reference values of the given authentication parameter.

In some cases, at least one given authentication parameter of the given authentication parameters has a respective group of expected values and wherein the comparing includes a comparison between the authentication value of the at least one given authentication parameter and the corresponding group of expected values of the at least one given authentication parameter.

In some cases, the corresponding group of expected values does not change over time.

In some cases, the corresponding group of expected values changes over time.

In some cases, the corresponding group of expected values is calculated based on one or more expected values determination rules.

In some cases, the reference values of the given authentication parameter include a plurality of readings obtained in response to a plurality of past retrievals from the given network-connected device, and wherein the corresponding group of expected values is calculated based on a plurality of the reference values of the given authentication parameter.

In some cases, at least one of the given authentication parameters relates to a network environment of the given network-connected device.

In some cases, at least one of the given authentication parameters is obtained from a sensor connected to the given network-connected device.

In some cases, the reference values of the respective authentication parameters associated with the respective network-connected device are collected from the respective network-connected device.

In some cases, at least one of the given authentication parameters is associated with a hardware of the given network-connected device.

In some cases, die authentication values are obtained for a targeted randomized subset of the respective authentication parameters.

In some cases, the network-connected device is an Internet of Things (IoT) device.

In some cases, the processing resource is further configured to obtain an image signature of an authentication application installed on the given network-connected device, and to verify that the image signature is identical to a reference image signature associated with the authentication application.

In some cases, the authentication application is downloaded to the network-connected device from a network location.

In some cases, the processing resource is further configured to obtain a software stack signature of one or more applications installed on the given network-connected device, and to verify that the software stack signature is identical to a reference software stack signature associated with the given network-connected device.

In some cases, at least one of the expected values or the expected value ranges or the group of expected values is determined based on a correlation between reference values of at least two of the authentication parameters.

In some cases, at least one of the expected values or the expected value ranges or the group of expected values is determined based on a correlation between at least one reference value of at least one of the authentication parameters and external data obtained from an external information source other than the network connected devices and external to the network-connected device authentication system.

In some cases, the authentication parameters are associated with respective weights and wherein the authentication grade is calculated also utilizing the weights.

In accordance with a second aspect of the presently disclosed subject matter, there is provided a network-connected device authentication method, the network-connected device authentication method comprising: providing, by a processing resource, a contracts database comprising a plurality of authentication-enabling information records, each authentication-enabling information record containing a network access descriptor of a respective network-connected device and reference values of respective authentication parameters of the respective network-connected device; obtaining, by the processing resource, from a requestor, an authentication request including a given network access descriptor associated with a given network-connected device to be authenticated; retrieving, by the processing resource, from the given network-connected device, utilizing the given network access descriptor, a plurality of authentication values obtained by reading current values of the respective authentication parameters of the given network-connected device, wherein one or more given authentication parameters of the authentication parameters a dynamic value that changes over time, calculating, by the processing resource, an authentication grade indicative of authenticity of the given network-connected device by comparing each of the authentication values with a respective expected value, or expected value range, or a group of expected values, determined utilizing the respective reference values; and sending, by the processing resource, to the requestor, an authentication reply.

In some cases, the authentication reply includes the authentication grade.

In some cases, the authentication request is a request for authorization of a transaction involving the given network-connected device and wherein the authentication reply indicates authorization of the transaction upon determining that the grade is above a threshold.

In some cases, the authentication request is a request for authorization of a transaction involving the given network-connected device and wherein the authentication reply indicates the transaction as unauthorized upon determining that the grade is below a threshold.

In some cases, the method further comprises generating, by the processing resource, the given authentication-enabling information record by performing a contract creation process, during which the reference values are obtained by reading the current values of the respective authentication parameters of the given network-connected device.

In some cases, at least one given authentication parameter of the given authentication parameters has a corresponding expected value and wherein the comparing includes a comparison between the authentication value of the at least one given authentication parameter and the corresponding expected value of the at least one given authentication parameter.

In some cases, the corresponding expected value docs not change over time.

In some cases, the corresponding expected value changes over time.

In some cases, the corresponding expected value is calculated based on one or more expected value determination rules.

In some cases, the reference values of the given authentication parameter include a plurality of readings obtained in response to a plurality of past retrievals from the given network-connected device, and wherein the corresponding expected value is calculated based on a plurality of the reference values of the given authentication parameter.

In some cases, at least one given authentication parameter of the given authentication parameters has a respective expected value range and wherein the comparing includes a comparison between the authentication value of the at least one given authentication parameter and the corresponding expected value range of the at least one given authentication parameter.

In some cases, the corresponding expected value range does not change over time.

In some cases, the corresponding expected value range changes over time.

In some cases, the corresponding expected value range is calculated based on one or more expected value determination rules.

In some cases, the reference values of the given authentication parameter include a plurality of readings obtained in response to a plurality of past retrievals from the given network-connected device, and wherein the corresponding expected value range is calculated based on a plurality of the reference values of the given authentication parameter.

In some cases, at least one given authentication parameter of the given authentication parameters has a respective group of expected values and wherein the comparing includes a comparison between the authentication value of the at least one given authentication parameter and the corresponding group of expected values of the at least one given authentication parameter.

In some cases, the corresponding group of expected values does not change over time.

In some cases, the corresponding group of expected values changes over time.

In some cases, the corresponding group of expected values is calculated based on one or more expected values determination rules.

In some cases, the reference values of the given authentication parameter include a plurality of readings obtained in response to a plurality of past retrievals from the given network-connected device, and wherein the corresponding group of expected values is calculated based on a plurality of the reference values of the given authentication parameter.

In some cases, at least one of the given authentication parameters relates to a network environment of the given network-connected device.

In some cases, at least one of the given authentication parameters is obtained from a sensor connected to the given network-connected device.

In some cases, the reference values of the respective authentication parameters associated with the respective network-connected device are collected from the respective network-connected device.

In some cases, at least one of the given authentication parameters is associated with a hardware of the given network-connected device.

In some cases, the authentication values are obtained for a targeted randomized subset of the respective authentication parameters.

In some cases, the network-connected device is an Internet of Things (IoT) device.

In some cases, the method further comprises obtaining, by the processing resource, an image signature of an authentication application installed on the given network-connected device, and verifying that the image signature is identical to a reference image signature associated with the authentication application.

In some cases, the authentication application is downloaded to the network-connected device from a network location.

In some cases, the method further comprises obtaining, by the processing resource, a software stack signature of one or more applications installed on the given network-connected device, and verifying that the software stack signature is identical to a reference software stack signature associated with the given network-connected device.

In some cases, at least one of the expected values or the expected value ranges or the group of expected values is determined based on a correlation between reference values of at least two of the authentication parameters.

In some cases, at least one of the expected values or the expected value ranges or the group of expected values is determined based on a correlation between at least one reference value of at least one of the authentication parameters and external data obtained from an external information source other than the network connected devices and external to the network-connected device authentication system.

In some cases, the authentication parameters are associated with respective weights and wherein the authentication grade is calculated also utilizing the weights.

In accordance with a third aspect of the presently disclosed subject matter, there is provided a non-transitory computer readable storage medium having computer readable program code embodied therewith, the computer readable program code, executable by at least one processor of a computer to perform a method comprising: providing, by a processing resource, a contracts database comprising a plurality of authentication-enabling information records, each authentication-enabling information record containing a network access descriptor of a respective network-connected device and reference values of respective authentication parameters of the respective network-connected device; obtaining, by the processing resource, from a requestor, an authentication request including a given network access descriptor associated with a given network-connected device to be authenticated; retrieving, by the processing resource, from the given network-connected device, utilizing the given network access descriptor, a plurality of authentication values obtained by reading current values of the respective authentication parameters of the given network-connected device, wherein one or more given authentication parameters of the authentication parameters a dynamic value that changes over time; calculating, by the processing resource, an authentication grade indicative of authenticity of the given network-connected device by comparing each of the authentication values with a respective expected value, or expected value range, or a group of expected values, determined utilizing the respective reference values; and sending, by the processing resource, to the requestor, an authentication reply.

### BRIEF DESCRIPTION OF THE DRAWINGS

**Fig.1a** Shows Connections between IoT Device, Central Agency and External Fulfillment Service while Business Transaction Initiated by IoT Device, in accordance with the presently disclosed subject matter;
**Fig.1b** Shows Connections between JoT Device, Central Agency and External Requestor (Party) while Business Transaction Initiated by External Party, in accordance with the presently disclosed subject matter;
**Fig.2** Depicts Communication Diagram of the Contract Creation process, in accordance with the presently disclosed subject matter;
**Fig.3** Shows Process Flow of the Contract Creation, in accordance with the presently disclosed subject matter;
**Fig.4** Depicts Communication Diagram of the IoT Device Authentication & Secure Transaction Authorization, in accordance with the presently disclosed subject matter;
**Fig.5a** Shows Process Flow of the loT Device Authentication & Secure Transaction Authorization while initiated by IoT Device, in accordance with the presently disclosed subject matter; and
**Fig.Sb** Shows Process Flow of the IoT Device Authentication & Secure Transaction Authorization while initiated by external party via Central Agency, in accordance with the presently disclosed subject matter.

### DETAILED DESCRIPTION

IoT Device Authentication and Transaction Authorization Processes and its parties:
For Business transaction initiated by an loT Device 110, the parties are:
   ▪ IoT Device 110
   ▪ Central IoT Security Agency (Central Agency 120)
   ▪ External Fulfillment Service 130 (optional, not part of the invention. Usually exist in the case of eCommerce transactions, ordering, payments etc.)
For Business transaction initiated by external process and involving IoT Device, the parties are:
   ▪ IoT Device 110
   ▪ Central loT Security Agency (Central Agency 120)
   ▪ External Requestor/Party 140 (optional, not part of the invention)

IoT Device 110 - the device participating in any type of business transaction that needs to be secured- That's the Device to be Authenticated. If the business transaction is initiated by loT Device 110, the transaction is usually sent to the External Fulfillment service 130 to be performed.

In order to perform the transaction, the Device 110 should also communicate with Central Agency 120 for the Device 110 Authentication and the transaction Authorization.

Central Agency 120 - Service that authenticates the loT device 110 and provides the Transaction Authorization. Can be part of standard security credentials verification process or a separate service.

Central Agency 120 and IoT Device 110 can be connected over any type of known computer network 150 (e.g. TCP/IP).

External Fulfillment Service 130 (optional, not part of the invention) - the service invoked by IoT Device 110 in order to perform business transaction and needs the transaction authorization to fulfill the request (e.g. Credit Card Company or e-Commerce site need payment transaction authorization).

External Requestor 140 - a Party that asking Central agency 120 to Authenticate IoT Device 110 in order to perform business transaction.

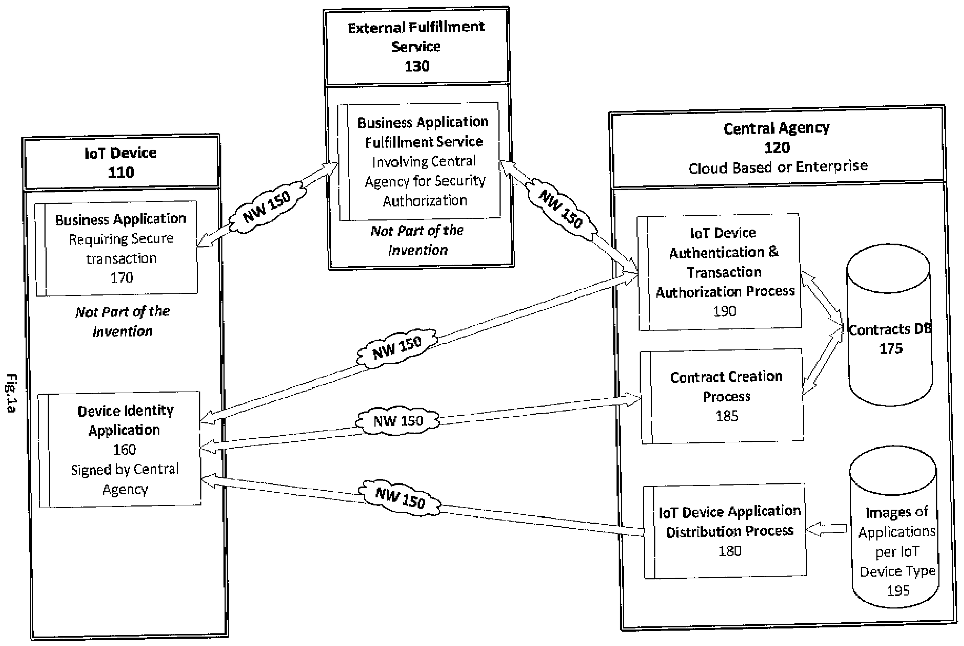

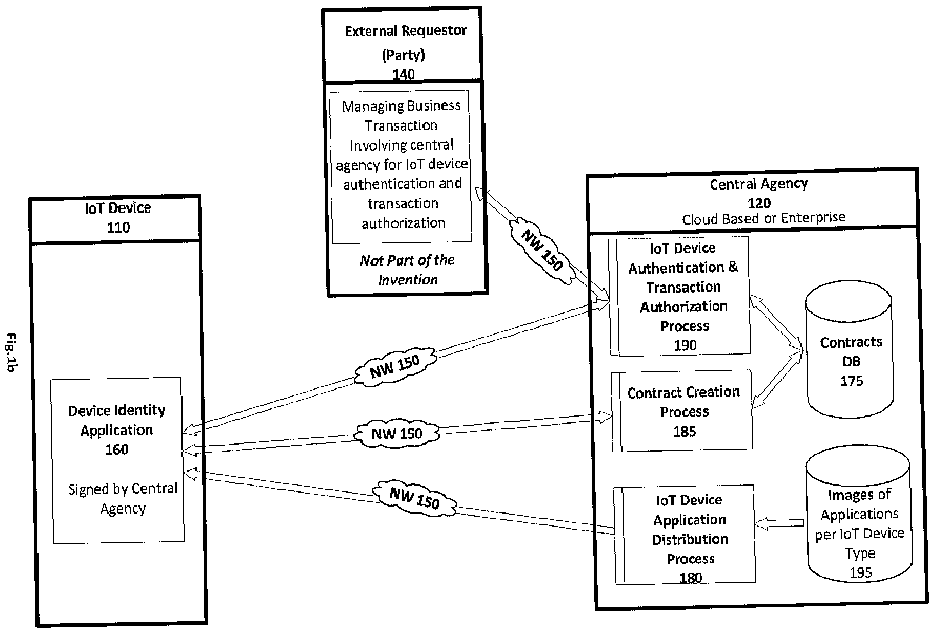

On **Fig.1a** are shown connections (via network 150) between IoT Device 110, Central Agency 120 and External Fulfillment Service 130 for transactions initiated by IoT Device 110. It also depicts major applications and processes running on the Device 110 and on Central Agency 120 and External Fulfillment Service 130 as well as main databases that are in use by these processes. **Fig 1****.b** shows connections between the parties involved in a transaction initiated by External Requestor 140.

IoT Device 110 Identity:
IoT Device 110 Identity is a central instance of the presently disclosed subject matter and a major element to be inspected in order to perform Device 110 Authentication.

The IoT Device 110 Identity is based on information regarding surrounding physical environment, as it can be discovered by Device 110 itself using its own sensors, its network 150 neighborhood as known to the device 110 as well as on the Device 110 features and information sources.

Every sensor built into- or connected to- IoT Device 110 can be used to constitute the Device 110 Identity.

Between such sensors and information sources (Device 110 features) there are:
▪ Sensors of the Device 110 allowing to retrieve IDs of the Device 110 its installed on, (e.g. chassis numbers for home appliances or cars, etc.).
▪ Sensors of the Device 110 indicating geographical position of the Device 110 (e.g. GPS, altimeter, etc.).
▪ Sensors of the Device 110 indicating movement of the Device 110 (e.g. accelerometer, etc.).
▪ Sensors of the Device 110 measuring parameters of physical environment (e.g. ambient temperature, atmosphere pressure, ambient humidity, etc.).
▪ Video Cameras and Microphones of the Device 110.
▪ Sensors of the Device 110 related to specific function of certain loT device 110 intended to monitor or control external environment or Device 110 (e.g. angle, velocity, viscosity, temperature, humidity, electric current parameters, magnetic field parameters, chemical or biological material or process parameters, etc.).
▪ Information related to Device 110 itself (e.g. Device 110 Number, Hardware configuration, type and version of OS and application Software installed on Device 110, etc.).
▪ Information related to security hardware features installed on the Device 110 (e.g. SIM cards coupled with the Device 110, TPM modules, etc.).
▪ Information related to the Device 110 sensors configuration and hardware status (e.g. make, model and serial number of each sensor, available sensor parameters, etc.).
▪ Information related to network 150 channels available on the Device 110 (Cellular, WiFi, IR, NFC of different types, etc.).
▪ Information regarding the Device neighborhood (connected devices discoverable by the Device 110) on each type of network 150 channels.
▪ Information of different clocks and timers of the Device 110.
▪ Information on Signatures of significant parts of the Device 110 software stack, including sensors device drivers, sensors HAL, etc. - for tamper protection of the original Device 110 software stack.
▪ Signature of the Device 110 Identity Application introduced as part of the presently disclosed subject matter.

IoT Device 110:
As shown on **Fig.1a** and **Fig.1b****,** the IoT Device 110 is running a Device Identity Application 160 that is signed by- and downloaded from- Central Agency 120 (or any App Store on its behalf). The Device Identity Application 160 is intended for collecting full or partial Device 110 Identity information in response to Central Agency 120 dynamic request, encrypting and/or signing it, and passing it over to the Central Agency 120.

In addition, ToT device 110 can also run different business, measurement, control, etc. application(s) 170. In the depicted example on Fig. 1a, Business (eCommerce) application 170 invokes External Fulfilment Service 130 (e.g. eCommerce internet site) to perform Business transaction.

Central Agency 120:
The Software Server/Service that authenticates the loT device 110 and provides Transaction Authorization. In order to do this the Central Agency 120:
▪ Provides each one of IoT devices 110 with special Device Identity Application 160 signed by the Central Agency 120 (if required, other methods of application distribution, such as application stores are also supported).
▪ Performs one-time binding process. During binding the Central Agency 120 collects authentication-related information (including Device 110 Identity) from each one of the IoT devices 110 expected to participate in secure transaction and storing it into secure DB 175. Collected information is called Contract.
▪ Issues Dynamic Request (Challenge) for each transaction requires Device 110 Authentication.
▪ Receives the Challenge Response, making decision on Authenticating of IoT Device 110 and Authorizing the Transaction.
▪ Sends out the Transaction Approvals.

Central Agency 120 can be implemented either as a cloud, enterprise cloud service or enterprise on-premise server.

Central Agency 120 can take part in standard security credentials verification process or act as a separate service.

As shown on **Fig.1a****.** **Fig.1b****,** the Central Agency is running loT Device Application Distribution Process 180 (if required), Contract Creation Process 185 and IoT Device Authentication & Transaction Authorization Process 190, - all arc described below. IoT Device Application Distribution Process 180 uses database 195 with Images of IoT Device Identification applications classified per loT device 110 (OS, Hardware). Contracts DB 175 holds Device Identity for all bound (Contracted) devices 110 and is used by Contract Creation Process 185 and IoT Device Authentication & Transaction Authorization Process 190,

loT Device Authentication and Transaction Authorization Process 190:
The Device Authentication and Transaction Authorization process 190 is split into two different stages;
▪ Contract creation process 185 - one-time process
▪ IoT Device Authentication and secure Transaction Authorization 190

The Device Authentication and secure Transaction Authorization process 190 can be initiated by Central Agency 120 as a result of Business Transaction request. Alternatively, the Central agency 120 can perform periodical Device 110 Authentication and notify External Requestor 140 only in the case of suspicious / negative Authentication.

Contract creation process 185 (binding):
▪ Happens only once and usually requires intervention/confirmation of the Persona who is authorized IoT device 110 operator *I* owner and overseeing the transaction authorization. Alternatively, can be performed as pure M2M one-time Identity build and Authentication, including multi-factor approach.
▪ Required for each IoT Device 110 participating in strong Authentication or expected to initiate unmanned secure transaction.
▪ Assume that Device Identity Application 160 was downloaded in advance from the Central Agency 120 (via Application Distribution Process 180) or, alternatively, from any Application Store on Central Agency 120 behalf. In any case the Device Identity Application 160 is signed by the Central Agency 120 and its type depends on the type of IoT Device 110 (Operating system, Hardware in some cases).
▪ During the Contract creation, the Central Agency 120 collects and stores all the data comprising Device 110 Identity.
▪ According to the type of IoT Device 110, the Central Agency 120 classifies the Device 110 Identity parameters in order to use them in Dynamic Request/Response challenge and Matching Process, as further detailed herein.
▪ Some significant changes in Device 110 Identity might stimulate re-creation of the Contract.
▪ Optionally - Standard Security Credentials info (User/Password, Credit Card info, Fingerprints etc.) can also be collected in Contract Creation process 185.

Contract Creation Process 185 flow:

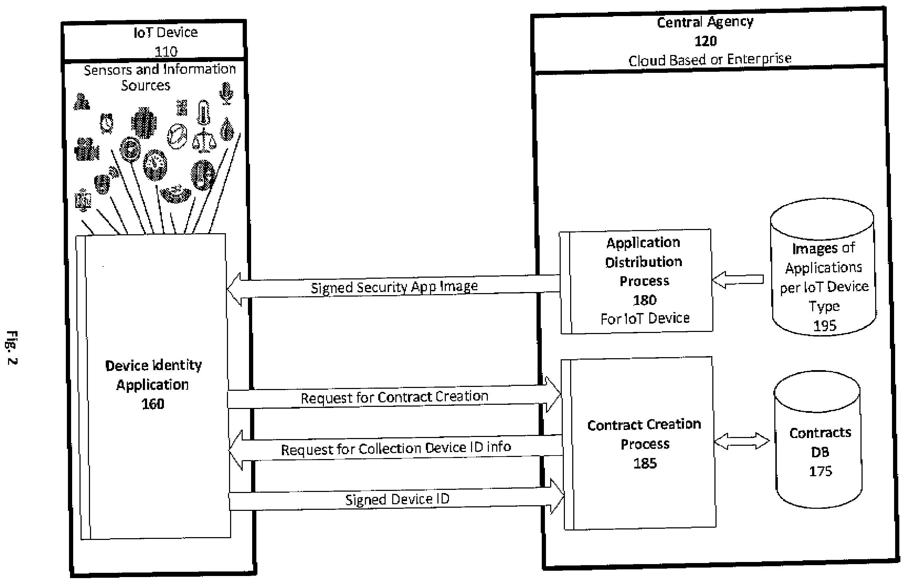

Fig.2 Depicts Communication Diagram of the Contract Creation process 185.

The first phase of communication includes download of the Device Identity Application 160 from Images Database 195 using Application Distribution Process 180 or, alternatively, from any Application Store according to the type of IoT device 110. Request for this download commonly coming as a human initiated operation, sometimes from the same IoT Device 110. but can be also implemented in pure M2M environment. Application Distribution Process 180 also produces and stores encrypted Signature for the Application for future verification.

The Contract Creation Process 185 might be initiated or supervised by human operation on IoT Device 110 but also can be implemented as pure M2M one-time discovery process initiated by external (e.g. Management and Control) system. The Contract Creation Process 185 includes collection of Device 110 Identity information by Device Identity Application 160 and sending it back to the Central Agency 120 in encrypted and/or signed form for storing in Contracts database 175.

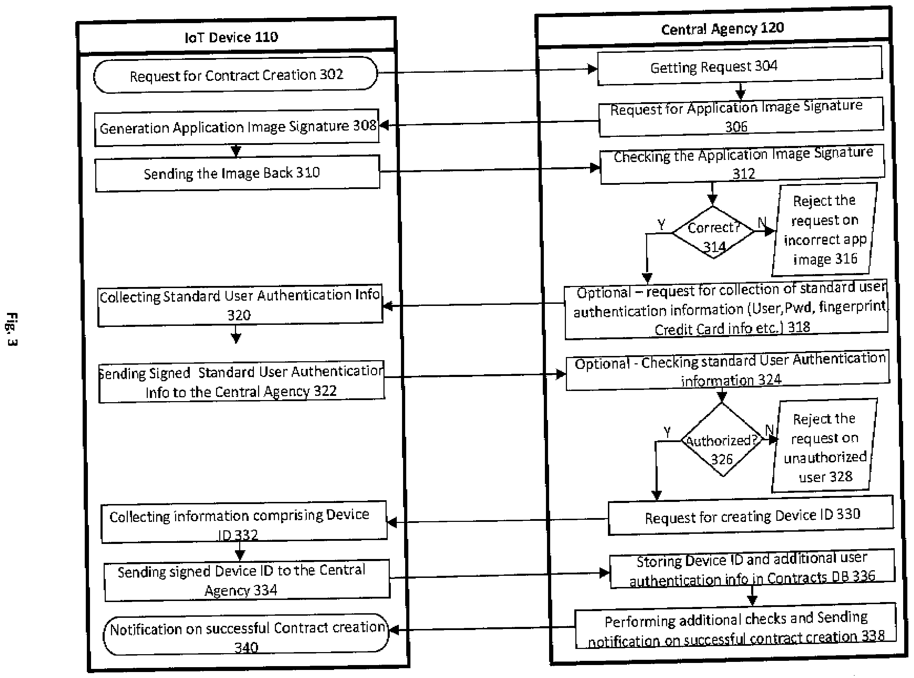

Flow diagram of the Contract Creation Process 185 is shown on **Fig. 3****.** Request for Contract creation is sent from IoT Device 110 to central agency 120 (blocks 302 and 304) via Device Identity Application 160 and initiated by human Persona or implemented as a pure M2M discovery process initiated by External Requestor 140. The Process starts from checking that the instance of Device Identity Application 160 residing on IoT Device 110 is still intact and was not tampered (blocks 306-312). This check performed by comparison of the encrypted Application Signature with the original one stored by Central Agency 120 in the Application Image DB 195. If there is a mismatch - the request for contract creation is rejected (blocks 314-316).

The next optional step includes collection, and authentication of standard security credentials (such as User IDs, passwords, fingerprints or credit card information) (blocks 318-324). Standard security credentials can allow authentication of the User using internal Central Agency 120 mechanisms or via external requests. Authenticated standard security credentials are stored in Contracts DB 175 of the Central Agency 120. If there is authentication fails- the request for contract creation is rejected (blocks 326-328).

After that, the Contract Creation Process 185 sends request for full Device Identity creation (block 330). Device Identity Application 160 collects all the requested information, encrypts / signs it and sends it back to the Central Agency 120 for storing in Contracts DB 175 (blocks 332-336).

At this point, in some cases, it will be possible to perform additional checks (such as to check that the software stack of the Device 110 OS was not pre-tampered by comparison the OS signatures provided by the OS vendor with the collected ones) and to send a notification of successful contract creation to the IoT device 110 (blocks 338-340).

IoT Device Authentication & Transaction Authorization Process 190:
▪ Happens each time when strong Authentication of the IoT Device 110 is required by External Party 140 via Central Agency 120 or the IoT Device 110 Initiates Secure transaction (via Central Agency 120 as well).
▪ Central Agency 120 performing the Device 110 Authentication by:
   □ Implementing Dynamic Challenge/Response Authentication process.
   □ Different unpredictable challenge is issued by Central Agency 120 each time (targeted, randomized subset of the Device 120 Identity parameters). The Challenge is generated by special algorithm
   □ IoT Device 110 (more exactly, the Device Identity Application 160) compelled to collect dissimilar information comprising (subset of full) Device 110 Identity in order to respond to each challenge.
   □ Central Agency 120 comparing lately collected Device 110 Identity with the one acquired during the Contract creation process 185. This comparison is performed using Matching Process.
   □ Communication protocol between Central Agency 120 and Device Identity Application 160 utilizes encryption (if supported by the Device 110) or signatures (e.g. for low end IoT Devices 110) in order to secure the communication.
▪ If the information matches - the Central Agency 120 Approves the Device 110 Authentication and, if required, Authorizes the transaction.
▪ If the information doesn't match- the Central Agency 120 performs additional Negative Match process, that include actions of Rejected Device 110 Authentication and may result in the transaction rejection or, if applicable, request to re-new the Contract.
▪ Optionally - Standard Security Credentials info (User/Password, Credit Card info, Fingerprints etc.) can also be verified and impact Authorize / Not Authorize decision.

IoT Device Authentication & Authorized Secure Transaction 190 - Process flow.

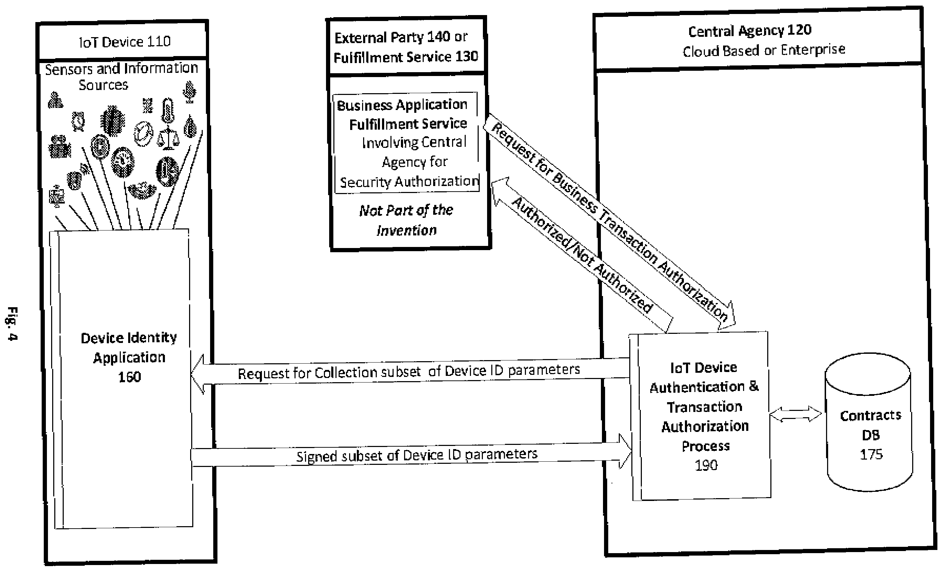

Communication Diagram of the loT Device Authentication & Secure Transaction Authorization 190 is shown on **Fig. 4****.**

IoT Device 110 Authentication request is send from External Fulfillment Service 130 or other External Party 140 via Central Agency 120.

The request is performed by IoT Device Authentication and secure Transaction Authorization Process 190 which communicates with Device Identity Application 160 residing on ZoT Device 110 for this purpose.

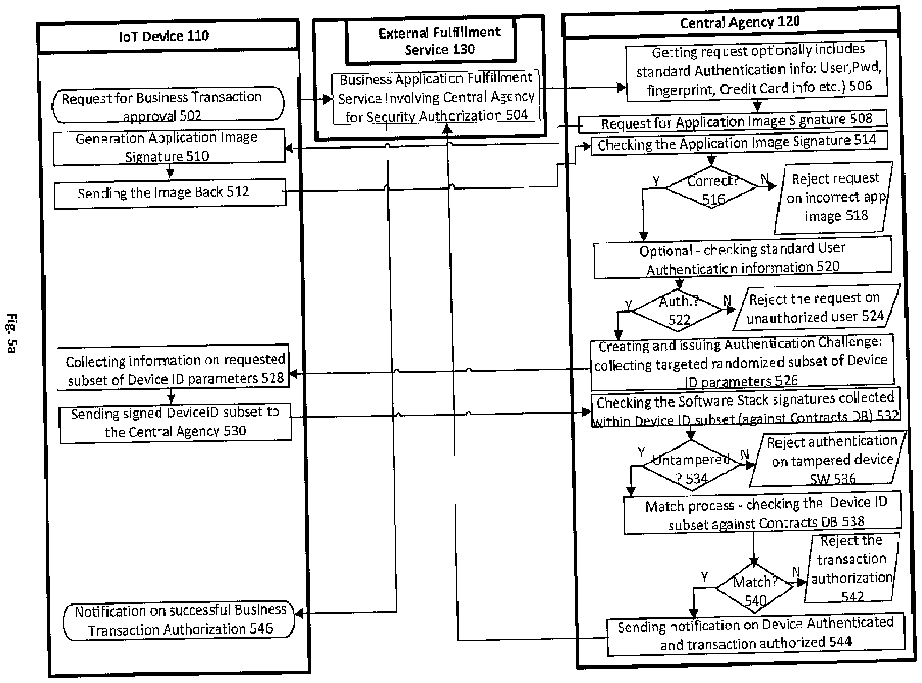

Flow Diagram of IoT Device Authentication & Secure Transaction Authorization Process 190 while initiated by IoT Device 110 is shown on **Fig. 5a****.**

In this case the request for IoT Device 110 Authentication is send to the Central Agency 120 by External Fulfillment Service 130 as a result of invocation from Business Application 170 running on IoT Device 110 itself.

The Process starts from checking that Device Identity Application 160 residing on IoT Device 110 is still intact and was not tampered (blocks 502-518). The check performed by comparison of the encrypted Application Signature with die original one stored by Central Agency 120 in the Application Image DB 195.

The next optional step includes verification of standard security credentials (such as UserIDs, passwords, fingerprints or credit card information) (blocks 520-524). The authentication fails and the transaction is not authorized if provided credentials aren't valid.

In the next step the IoT Device Authentication Process 190 prepares and sends the dynamic Challenge Request for collecting subset of Device 110 Identity parameters (blocks 526-530). The subset is selected by special algorithm, according to existing in Contracts DB 175 knowledge of loT device 110 features (parameters) and their ability to provide strong, uncompromised Device 110 Identity. This algorithm performs optimizations in correspondence with Matching Process algorithm to provide best possible reliability of the Authentication. The algorithm includes targeted randomized parameter selection and obfuscates the parameter enumeration which significantly complicates interception of the communication.

The request is executed by Device Identity Application 160.

Among information parameters comprising Device 110 Identity and analyzed for each transaction are signatures of some parts of the device 110 software (such as stack of sensors device drivers). That's to verify that those, external to Device Identity Application 160, sensitive parts of the software stack (they are usually provided by the device hardware vendors or coming with Operating System), were not tampered (blocks 532-534). The Authentication falls if any indication of altered software stack was found (block 536).

The following step invokes Matching Process (see section below) and making decision on the Device Authenticated/Not Authenticated followed by decision on the Transaction Authorized / Not Authorized, if required (blocks 538-542).

Notification on the decision is sent out to the relevant parties (blocks 544-546).

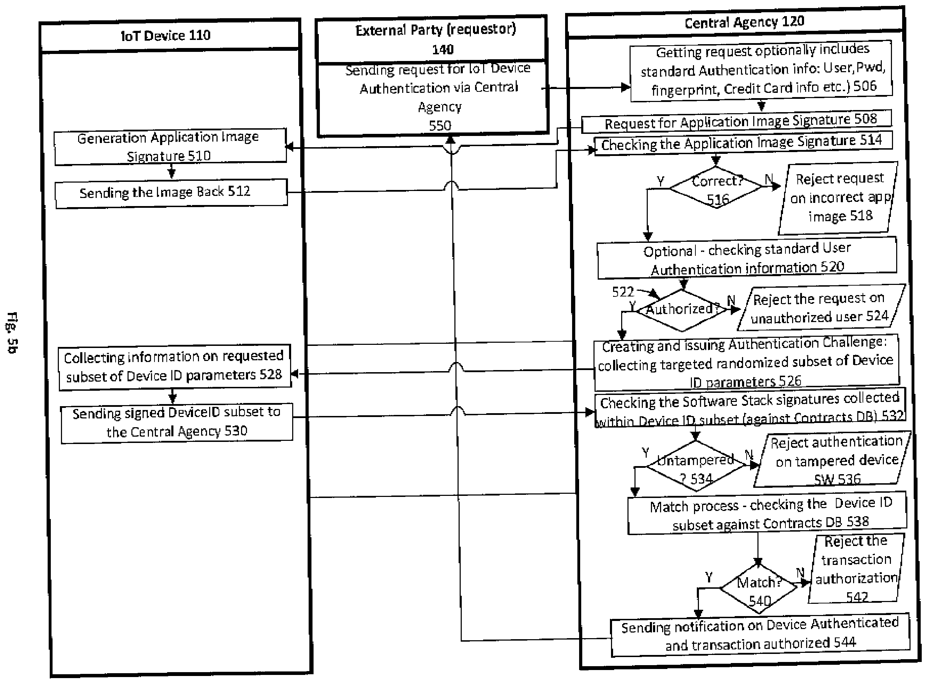

Flow Diagram of the IoT Device Authentication & Secure Transaction Authorization Process 190 while initiated by external party 140 via Central Agency 120 is shown on **Fig. 5b****.** There are slight differences from the process initiated by External Fulfillment process.

In this case, the request for the IoT Device 110 Authentication is send to the Central Agency 120 from the External Party 140 (block 550). This Party 140 also gets notification on IoT Device 110 Authentication success or failure (from block 544).

In some cases, when only IoT Device 110 Authentication is required, the transaction Authorization is not performed.

Matching Process (of block 538):
Matching Process for making decision on Authentication / non-Authentication of loT Device 110.
▪ The decision provided in form of Authentication Grade reflecting the level of reliability of the Device 110 Authentication
▪ This Grade is a result of special algorithm making comparison between full original Device 110 Identity collected during first time Contract (binding) process and the (subset) Device 110 Identity lately received as a response to dynamic Authentication challenge
▪ The algorithm of Matching Process uses for comparison its own topological metrics in functional space, defined in a way that larger distance in this space indicates lower probability that both Identities are belonging to the same device 110.
▪ In addition to comparison of individual parameter values between both Identities, in many cases the Matching process relies on comparison with the whole collected history of values of the specific parameter using mathematical methods of statistical analysis, behavioral analysis, machine learning and artificial intelligence.
▪ It can be stated that the Authentication Grade is a measure of probability that the original and lately collected Device 110 Identity are belonging to the same device 110.
▪ Different parameters have different impact on Matching Process reflected in their weights. Please see below for some examples.

Signatures of sensitive parts of the software stack are collected within challenge/response process but usually verified before the Matching Process invoked.

The Matching Process:
▪ Matching Process distinguishing between few categories of Device 110 Identity parameters and making decisions according to parameter type:
   □ Device 110 Identification parameters that can't change (e.g. Chassis Number of the Apparatus the Device 110 is installed on, Manufacturer of each Sensor, their Model and Serial Numbers etc.). This is a key (highly weighted in overall Grade) parameter for Device Authentication and Transaction Authorization
   □ Device 110 Identification parameters that should not change within the measurement error (e.g. GPS position or Altitude of stationary device 110, etc.). This is a key (highly weighted in overall Grade) parameter for Device Authentication and Transaction Authorization
   □ Device 110 Identification parameters with variable values that still expected to remain in some (usually physically determined) Range (e.g. the Device 110 battery voltage or temperature). These parameters can be used to improve quality of Device 110 Identification or imply Authentication Rejection while not in the Range. Out of Range values usually will give evidence of tampered Device 110 Identity or, is some cases, malfunctioning device 110 sensors. Ranges of parameters can be predetermined by IoT Device 110 type and/or adjusted using statistical analysis performed by Matching Process
   □ Device 110 Identification parameters with well-known behavior (such as wall clock or life time counter). This is a key (highly weighted in overall Grade) parameter for Device Authentication and Transaction Authorization
   □ Device 110 Identification parameters with essentially random, arbitrary values that can't be used for Identification and providing "background noise" complicating tampering of Device 110 Identity (e.g. accelerometer data for constantly moving device 110 of random transaction identifier)
▪ In addition to comparison of individual parameters with their original values, the Matching Process employs comprehensive rule-based algorithms of the information cross checks:
   □ Logical checks of parameter combinations (for example the device 110 temperature or its battery temperature can't be lower than ambient for most of the devices, etc.).
   □ Logical checks of historical and statistical data as well as trends in data changes (for example, parameter with low historical fluctuation expected to remain in the same range, daily, weekly or seasonal trends and statistics can be verified. Another example can be counter of operations that can only increase, etc.).
   □ Logical checks of previously discovered and founded statistically significant cross-parameter correlations of different types. This is performed by using wide range of statistical analysis, from linear correlation and factor analysis to neural networks modeling.
   □ Logical checks of collected parameters or their groups against external information sources, known to Central Agency 120 performing Matching Process (for example GPS position assuming (using any geographical map information) that the device 110 is currently high in the mountain position while altitude and/or ambient atmosphere pressure docs not support this assumption. Another example can be comparison between current ambient temperature of outdoor device and weather information available from internet according to GPS position, etc.).
▪ These Logical Checks of the parameters combination can be used to improve quality of Device 110 Identification or imply Authentication Rejection while the combination is not correct. As such, "correct" or "incorrect" values will have different impact (weight) on the Authentication Grade. Logically incorrect values usually will give evidence of tampered Device 110 Identity or, is some cases, malfunctioning device 110 sensors.
▪ Final Authentication Grade is a weighted superposition of different parameters and their inter-dependent combinations.

## Claims

1. A network-connected device authentication system, the network-connected device authentication system comprising a processing resource configured to:
provide a contracts database comprising a plurality of authentication-enabling information records, each authentication-enabling information record containing a network access descriptor of a respective network-connected device and reference values of respective authentication parameters of the respective network-connected device;
obtain, from a requestor, an authentication request including a given network access descriptor associated with a given network-connected device to be authenticated;
retrieve, from the given network-connected device, utilizing the given network access descriptor, a plurality of authentication values obtained by reading current values of the respective authentication parameters of the given network-connected device, wherein one or more given authentication parameters of the authentication parameters has a dynamic value that changes over time, and wherein at least one given authentication value of the authentication values, associated with a respective given authentication parameter, is obtained from a sensor connected to the given network-connected device;
calculate an authentication grade indicative of authenticity of the given network-connected device by comparing each of the authentication values with a respective expected value, or expected value range, or a group of expected values, determined utilizing the respective reference values, wherein at least one of the reference values has been obtained by the sensor connected to the given network-connected device prior to obtaining its respective authentication value from the given network-connected device, and wherein the authentication grade depends on a distance between at least one of the expected values and its respective authentication value, the distance measured by a metric in a functional space; and
send, to the requestor, an authentication reply.

2. The network-connected device authentication system of claim 1, wherein the authentication request is a request for authorization of a transaction involving the given network-connected device and wherein the authentication reply indicates: (a) authorization of the transaction upon determining that the grade is above a threshold, or (b) rejection of the transaction upon determining that the grade is below the threshold.

3. The network-connected device authentication system of claim 1, wherein: (a) at least one given authentication parameter of the given authentication parameters has a corresponding expected value calculated based on one or more expected value determination rules, (b) the comparing includes calculating the distance between the authentication value of the at least one given authentication parameter and the corresponding expected value of the at least one given authentication parameter, and (c) the reference values of the given authentication parameter include a plurality of readings obtained in response to a plurality of past retrievals from the given network-connected device, wherein the corresponding expected value is calculated based on a plurality of the reference values of the given authentication parameter.

4. The network-connected device authentication system of claim 1, wherein: (a) at least one given authentication parameter of the given authentication parameters has a respective expected value range calculated based on one or more expected value determination rules (b) wherein the comparing includes calculating the distance between the authentication value of the at least one given authentication parameter and the corresponding expected value range of the at least one given authentication parameter, and (c) the reference values of the given authentication parameter include a plurality of readings obtained in response to a plurality of past retrievals from the given network-connected device, wherein the corresponding expected value range is calculated based on a plurality of the reference values of the given authentication parameter.

5. The network-connected device authentication system of claim 1, wherein: (a) at least one given authentication parameter of the given authentication parameters has a respective group of expected values calculated based on one or more expected values determination rules, (b) wherein the comparing includes calculating the distance between the authentication value of the at least one given authentication parameter and the corresponding group of expected values of the at least one given authentication parameter, and (c) the reference values of the given authentication parameter include a plurality of readings obtained in response to a plurality of past retrievals from the given network-connected device, wherein the corresponding group of expected values is calculated based on a plurality of the reference values of the given authentication parameter.

6. The network-connected device authentication system of claim 1, wherein the processing resource is further configured to: (a) obtain an image signature of an authentication application installed on the given network-connected device, and verify that the image signature is identical to a reference image signature associated with the authentication application, and (b) obtain a software stack signature of one or more applications installed on the given network-connected device, and verify that the software stack signature is identical to a reference software stack signature associated with the given network-connected device.

7. The network-connected device authentication system of claim 1, wherein: (a) at least one of the expected values or the expected value ranges or the group of expected values is determined based on a statistical analysis of a correlation between reference values of at least two of the authentication parameters, and (b) at least one of the expected values or the expected value ranges or the group of expected values is determined based on a statistical analysis of a correlation between at least one reference value of at least one of the authentication parameters and external data obtained from an external information source other than the network connected devices and external to the network-connected device authentication system.

8. A network-connected device authentication method, the network-connected device authentication method comprising:
providing, by a processing resource, a contracts database comprising a plurality of authentication-enabling information records, each authentication-enabling information record containing a network access descriptor of a respective network-connected device and reference values of respective authentication parameters of the respective network-connected device;
obtaining, by the processing resource, from a requestor, an authentication request including a given network access descriptor associated with a given network-connected device to be authenticated;
retrieving, by the processing resource, from the given network-connected device, utilizing the given network access descriptor, a plurality of authentication values obtained by reading current values of the respective authentication parameters of the given network-connected device, wherein one or more given authentication parameters of the authentication parameters has a dynamic value that changes over time, and wherein at least one given authentication value of the authentication values, associated with a respective given authentication parameter, is obtained from a sensor connected to the given network-connected device;
calculating, by the processing resource, an authentication grade indicative of authenticity of the given network-connected device by comparing each of the authentication values with a respective expected value, or expected value range, or a group of expected values, determined utilizing the respective reference values, wherein at least one of the reference values has been obtained by the sensor connected to the given network-connected device prior to obtaining its respective authentication value from the given network-connected device, and wherein the authentication grade depends on a distance between at least one of the expected values and its respective authentication value, the distance measured by a metric in a functional space; and
sending, by the processing resource, to the requestor, an authentication reply.

9. The network-connected device authentication method of claim 8, wherein the authentication request is a request for authorization of a transaction involving the given network-connected device and wherein the authentication reply indicates: (a) authorization of the transaction upon determining that the grade is above a threshold, or (b) rejection of the transaction upon determining that the grade is below the threshold.

10. The network-connected device authentication method of claim 8, wherein: (a) at least one given authentication parameter of the given authentication parameters has a corresponding expected value calculated based on one or more expected value determination rules, (b) the comparing includes calculating the distance between the authentication value of the at least one given authentication parameter and the corresponding expected value of the at least one given authentication parameter, and (c) the reference values of the given authentication parameter include a plurality of readings obtained in response to a plurality of past retrievals from the given network-connected device, wherein the corresponding expected value is calculated based on a plurality of the reference values of the given authentication parameter.

11. The network-connected device authentication method of claim 8, wherein: (a) at least one given authentication parameter of the given authentication parameters has a respective expected value range calculated based on one or more expected value determination rules, (b) the comparing includes calculating the distance between the authentication value of the at least one given authentication parameter and the corresponding expected value range of the at least one given authentication parameter, and (c) the reference values of the given authentication parameter include a plurality of readings obtained in response to a plurality of past retrievals from the given network-connected device, wherein the corresponding expected value range is calculated based on a plurality of the reference values of the given authentication parameter.

12. The network-connected device authentication method of claim 8, wherein: (a) at least one given authentication parameter of the given authentication parameters has a respective group of expected values calculated based on one or more expected values determination rules, (b) the comparing includes calculating the distance between the authentication value of the at least one given authentication parameter and the corresponding group of expected values of the at least one given authentication parameter, and (c) the reference values of the given authentication parameter include a plurality of readings obtained in response to a plurality of past retrievals from the given network-connected device, wherein the corresponding group of expected values is calculated based on a plurality of the reference values of the given authentication parameter.

13. The network-connected device authentication method of claim 8, further comprising: (a) obtaining, by the processing resource, an image signature of an authentication application installed on the given network-connected device, and verifying that the image signature is identical to a reference image signature associated with the authentication application, and (b) obtaining, by the processing resource, a software stack signature of one or more applications installed on the given network-connected device, and verifying that the software stack signature is identical to a reference software stack signature associated with the given network-connected device.

14. The network-connected device authentication method of claim 8, wherein: (a) at least one of the expected values or the expected value ranges or the group of expected values is determined based on a statistical analysis of a correlation between reference values of at least two of the authentication parameters, and (b) at least one of the expected values or the expected value ranges or the group of expected values is determined based on a statistical analysis of a correlation between at least one reference value of at least one of the authentication parameters and external data obtained from an external information source other than the network connected devices and external to the network-connected device authentication system.

15. A non-transitory computer readable storage medium having computer readable program code embodied therewith, the computer readable program code, executable by at least one processor of a computer to perform a method comprising:
providing, by a processing resource, a contracts database comprising a plurality of authentication-enabling information records, each authentication-enabling information record containing a network access descriptor of a respective network-connected device and reference values of respective authentication parameters of the respective network-connected device;
obtaining, by the processing resource, from a requestor, an authentication request including a given network access descriptor associated with a given network-connected device to be authenticated;
retrieving, by the processing resource, from the given network-connected device, utilizing the given network access descriptor, a plurality of authentication values obtained by reading current values of the respective authentication parameters of the given network-connected device, wherein one or more given authentication parameters of the authentication parameters has a dynamic value that changes over time, and wherein at least one given authentication value of the authentication values, associated with a respective given authentication parameter, is obtained from a sensor connected to the given network-connected device;
calculating, by the processing resource, an authentication grade indicative of authenticity of the given network-connected device by comparing each of the authentication values with a respective expected value, or expected value range, or a group of expected values, determined utilizing the respective reference values, wherein at least one of the reference values has been obtained by the sensor connected to the given network-connected device prior to obtaining its respective authentication value from the given network-connected device, and wherein the authentication grade depends on a distance between at least one of the expected values and its respective authentication value, the distance measured by a metric in a functional space; and
sending, by the processing resource, to the requestor, an authentication reply.

## Patentansprüche

1. System zur Authentifizierung einer netzwerkverbundenen Vorrichtung, wobei das System zur Authentifizierung einer netzwerkverbundenen Vorrichtung eine Verarbeitungsressource umfasst, die zu Folgendem konfiguriert ist:
Bereitstellen einer Vertragsdatenbank, die eine Vielzahl von authentifizierungsaktivierenden Informationsaufzeichnungen umfasst, wobei jede authentifizierungsaktivierende Informationsaufzeichnung einen Netzwerkzugriffsdeskriptor einer jeweiligen netzwerkverbundenen Vorrichtung und Referenzwerte von jeweiligen Authentifizierungsparametern der jeweiligen netzwerkverbundenen Vorrichtung enthält;
Erlangen, von einem Anforderer, einer Authentifizierungsanforderung, die einen gegebenen Netzwerkzugriffsdeskriptor beinhaltet, der mit einer gegebenen netzwerkverbundenen Vorrichtung assoziiert ist, die zu authentifizieren ist;
Abrufen, von der gegebenen netzwerkverbundenen Vorrichtung, unter Nutzung des gegebenen Netzwerkzugriffsdeskriptors, einer Vielzahl von Authentifizierungswerten, die durch Ablesen von aktuellen Werten der jeweiligen Authentifizierungsparameter der gegebenen netzwerkverbundenen Vorrichtung erlangt wird, wobei ein oder mehrere gegebene Authentifizierungsparameter der Authentifizierungsparameter einen dynamischen Wert aufweisen, der sich im Lauf der Zeit ändert, und wobei mindestens ein gegebener Authentifizierungswert der Authentifizierungswerte, der mit einem jeweiligen gegebenen Authentifizierungsparameter assoziiert ist, von einem Sensor erlangt wird, der mit der gegebenen netzwerkverbundenen Vorrichtung verbunden ist;
Berechnen einer Authentifizierungseinstufung, die auf die Authentizität der gegebenen netzwerkverbundenen Vorrichtung hinweist, durch Vergleichen von jedem der Authentifizierungswerte mit einem jeweiligen erwarteten Wert oder erwarteten Wertebereich oder einer Gruppe von erwarteten Werten, die unter Nutzung der jeweiligen Referenzwerte bestimmt werden, wobei mindestens einer der Referenzwerte durch den Sensor erlangt worden ist, der mit der gegebenen netzwerkverbundenen Vorrichtung verbunden ist, bevor sein jeweiliger Authentifizierungswert von der gegebenen netzwerkverbundenen Vorrichtung erlangt wird, und wobei die Authentifizierungseinstufung von einem Abstand zwischen mindestens einem der erwarteten Werte und seinem jeweiligen Authentifizierungswert abhängt, wobei der Abstand durch eine Metrik in einem Funktionsraum gemessen wird; und
Senden, an den Anforderer, einer Authentifizierungsantwort.

2. System zur Authentifizierung einer netzwerkverbundenen Vorrichtung nach Anspruch 1, wobei die Authentifizierungsanforderung eine Anforderung einer Autorisierung einer Transaktion ist, an der die gegebene netzwerkverbundene Vorrichtung beteiligt ist, und wobei die Authentifizierungsantwort Folgendes angibt: (a) Autorisierung der Transaktion bei Bestimmen, dass die Einstufung über einem Schwellenwert liegt, oder (b) Ablehnung der Transaktion bei Bestimmen, dass die Einstufung unter dem Schwellenwert liegt.

3. System zur Authentifizierung einer netzwerkverbundenen Vorrichtung nach Anspruch 1, wobei: (a) mindestens ein gegebener Authentifizierungsparameter der gegebenen Authentifizierungsparameter einen entsprechenden erwarteten Wert aufweist, der auf Grundlage einer oder mehrerer Regeln zur Bestimmung erwarteter Werte berechnet wird, (b) das Vergleichen Berechnen des Abstands zwischen dem Authentifizierungswert des mindestens einen gegebenen Authentifizierungsparameters und dem entsprechenden erwarteten Wert des mindestens einen gegebenen Authentifizierungsparameters beinhaltet und (c) die Referenzwerte des gegebenen Authentifizierungsparameters eine Vielzahl von Ablesungen beinhalten, die als Reaktion auf eine Vielzahl von vergangenen Abrufen von der gegebenen netzwerkverbundenen Vorrichtung erlangt wird, wobei der entsprechende erwartete Wert auf Grundlage einer Vielzahl der Referenzwerte des gegebenen Authentifizierungsparameters berechnet wird.

4. System zur Authentifizierung einer netzwerkverbundenen Vorrichtung nach Anspruch 1, wobei: (a) mindestens ein gegebener Authentifizierungsparameter der gegebenen Authentifizierungsparameter einen jeweiligen erwarteten Wertebereich aufweist, der auf Grundlage einer oder mehrerer Regeln zur Bestimmung erwarteter Werte berechnet wird, (b) das Vergleichen Berechnen des Abstands zwischen dem Authentifizierungswert des mindestens einen gegebenen Authentifizierungsparameters und dem entsprechenden erwarteten Wertebereich des mindestens einen gegebenen Authentifizierungsparameters beinhaltet und (c) die Referenzwerte des gegebenen Authentifizierungsparameters eine Vielzahl von Ablesungen beinhalten, die als Reaktion auf eine Vielzahl von vergangenen Abrufen von der gegebenen netzwerkverbundenen Vorrichtung erlangt wird, wobei der entsprechende erwartete Wertebereich auf Grundlage einer Vielzahl der Referenzwerte des gegebenen Authentifizierungsparameters berechnet wird.

5. System zur Authentifizierung einer netzwerkverbundenen Vorrichtung nach Anspruch 1, wobei: (a) mindestens ein gegebener Authentifizierungsparameter der gegebenen Authentifizierungsparameter eine jeweilige Gruppe von erwarteten Werten aufweist, die auf Grundlage einer oder mehrerer Regeln zur Bestimmung erwarteter Werte berechnet wird, (b) das Vergleichen Berechnen des Abstands zwischen dem Authentifizierungswert des mindestens einen gegebenen Authentifizierungsparameters und der entsprechenden Gruppe von erwarteten Werten des mindestens einen gegebenen Authentifizierungsparameters beinhaltet und (c) die Referenzwerte des gegebenen Authentifizierungsparameters eine Vielzahl von Ablesungen beinhalten, die als Reaktion auf eine Vielzahl von vergangenen Abrufen von der gegebenen netzwerkverbundenen Vorrichtung erlangt wird, wobei die entsprechende Gruppe von erwarteten Werten auf Grundlage einer Vielzahl der Referenzwerte des gegebenen Authentifizierungsparameters berechnet wird.

6. System zur Authentifizierung einer netzwerkverbundenen Vorrichtung nach Anspruch 1, wobei die Verarbeitungsressource ferner zu Folgendem konfiguriert ist: (a) Erlangen einer Bildsignatur einer Authentifizierungsanwendung, die auf der gegebenen netzwerkverbundenen Vorrichtung installiert ist, und Verifizieren, dass die Bildsignatur mit einer Referenzbildsignatur identisch ist, die mit der Authentifizierungsanwendung assoziiert ist, und (b) Erlangen einer Softwarestapelsignatur einer oder mehrerer Anwendungen, die auf der gegebenen netzwerkverbundenen Vorrichtung installiert sind, und Verifizieren, dass die Softwarestapelsignatur mit einer Referenzsoftwarestapelsignatur identisch ist, die mit der gegebenen netzwerkverbundenen Vorrichtung assoziiert ist.

7. System zur Authentifizierung einer netzwerkverbundenen Vorrichtung nach Anspruch 1, wobei: (a) mindestens einer der erwarteten Werte oder der erwarteten Wertebereiche oder der Gruppe von erwarteten Werten auf Grundlage einer statistischen Analyse einer Korrelation zwischen Referenzwerten von mindestens zwei der Authentifizierungsparameter berechnet wird und (b) mindestens einer der erwarteten Werte oder der erwarteten Wertebereiche oder der Gruppe von erwarteten Werten auf Grundlage einer statistischen Analyse einer Korrelation zwischen mindestens einem Referenzwert von mindestens einem der Authentifizierungsparameter und externen Daten berechnet wird, die von einer externen Informationsquelle erlangt werden, die eine andere als die netzwerkverbundenen Vorrichtungen ist und extern von dem System zur Authentifizierung einer netzwerkverbundenen Vorrichtung ist.

8. Verfahren zur Authentifizierung einer netzwerkverbundenen Vorrichtung, wobei das Verfahren zur Authentifizierung einer netzwerkverbundenen Vorrichtung Folgendes umfasst:
Bereitstellen, durch eine Verarbeitungsressource, einer Vertragsdatenbank, die eine Vielzahl von authentifizierungsaktivierenden Informationsaufzeichnungen umfasst, wobei jede authentifizierungsaktivierende Informationsaufzeichnung einen Netzwerkzugriffsdeskriptor einer jeweiligen netzwerkverbundenen Vorrichtung und Referenzwerte von jeweiligen Authentifizierungsparametern der jeweiligen netzwerkverbundenen Vorrichtung enthält;
Erlangen, durch die Verarbeitungsressource, von einem Anforderer, einer Authentifizierungsanforderung, die einen gegebenen Netzwerkzugriffsdeskriptor beinhaltet, der mit einer gegebenen netzwerkverbundenen Vorrichtung assoziiert ist, die zu authentifizieren ist;
Abrufen, durch die Verarbeitungsressource, von der gegebenen netzwerkverbundenen Vorrichtung, unter Nutzung des gegebenen Netzwerkzugriffsdeskriptors, einer Vielzahl von Authentifizierungswerten, die durch Ablesen von aktuellen Werten der jeweiligen Authentifizierungsparameter der gegebenen netzwerkverbundenen Vorrichtung erlangt wird, wobei ein oder mehrere gegebene Authentifizierungsparameter der Authentifizierungsparameter einen dynamischen Wert aufweisen, der sich im Lauf der Zeit ändert, und wobei mindestens ein gegebener Authentifizierungswert der Authentifizierungswerte, der mit einem jeweiligen gegebenen Authentifizierungsparameter assoziiert ist, von einem Sensor erlangt wird, der mit der gegebenen netzwerkverbundenen Vorrichtung verbunden ist;
Berechnen, durch die Verarbeitungsressource, einer Authentifizierungseinstufung, die auf die Authentizität der gegebenen netzwerkverbundenen Vorrichtung hinweist, durch Vergleichen von jedem der Authentifizierungswerte mit einem jeweiligen erwarteten Wert oder erwarteten Wertebereich oder einer Gruppe von erwarteten Werten, die unter Nutzung der jeweiligen Referenzwerte bestimmt werden, wobei mindestens einer der Referenzwerte durch den Sensor erlangt worden ist, der mit der gegebenen netzwerkverbundenen Vorrichtung verbunden ist, bevor sein jeweiliger Authentifizierungswert von der gegebenen netzwerkverbundenen Vorrichtung erlangt wird, und wobei die Authentifizierungseinstufung von einem Abstand zwischen mindestens einem der erwarteten Werte und seinem jeweiligen Authentifizierungswert abhängt, wobei der Abstand durch eine Metrik in einem Funktionsraum gemessen wird; und
Senden, durch die Verarbeitungsressource, an den Anforderer, einer Authentifizierungsantwort.

9. Verfahren zur Authentifizierung einer netzwerkverbundenen Vorrichtung nach Anspruch 8, wobei die Authentifizierungsanforderung eine Anforderung einer Autorisierung einer Transaktion ist, an der die gegebene netzwerkverbundene Vorrichtung beteiligt ist, und wobei die Authentifizierungsantwort Folgendes angibt: (a) Autorisierung der Transaktion bei Bestimmen, dass die Einstufung über einem Schwellenwert liegt, oder (b) Ablehnung der Transaktion bei Bestimmen, dass die Einstufung unter dem Schwellenwert liegt.

10. Verfahren zur Authentifizierung einer netzwerkverbundenen Vorrichtung nach Anspruch 8, wobei: (a) mindestens ein gegebener Authentifizierungsparameter der gegebenen Authentifizierungsparameter einen entsprechenden erwarteten Wert aufweist, der auf Grundlage einer oder mehrerer Regeln zur Bestimmung erwarteter Werte berechnet wird, (b) das Vergleichen Berechnen des Abstands zwischen dem Authentifizierungswert des mindestens einen gegebenen Authentifizierungsparameters und dem entsprechenden erwarteten Wert des mindestens einen gegebenen Authentifizierungsparameters beinhaltet und (c) die Referenzwerte des gegebenen Authentifizierungsparameters eine Vielzahl von Ablesungen beinhalten, die als Reaktion auf eine Vielzahl von vergangenen Abrufen von der gegebenen netzwerkverbundenen Vorrichtung erlangt wird, wobei der entsprechende erwartete Wert auf Grundlage einer Vielzahl der Referenzwerte des gegebenen Authentifizierungsparameters berechnet wird.

11. Verfahren zur Authentifizierung einer netzwerkverbundenen Vorrichtung nach Anspruch 8, wobei: (a) mindestens ein gegebener Authentifizierungsparameter der gegebenen Authentifizierungsparameter einen jeweiligen erwarteten Wertebereich aufweist, der auf Grundlage einer oder mehrerer Regeln zur Bestimmung erwarteter Werte berechnet wird, (b) das Vergleichen Berechnen des Abstands zwischen dem Authentifizierungswert des mindestens einen gegebenen Authentifizierungsparameters und dem entsprechenden erwarteten Wertebereich des mindestens einen gegebenen Authentifizierungsparameters beinhaltet und (c) die Referenzwerte des gegebenen Authentifizierungsparameters eine Vielzahl von Ablesungen beinhalten, die als Reaktion auf eine Vielzahl von vergangenen Abrufen von der gegebenen netzwerkverbundenen Vorrichtung erlangt wird, wobei der entsprechende erwartete Wertebereich auf Grundlage einer Vielzahl der Referenzwerte des gegebenen Authentifizierungsparameters berechnet wird.

12. Verfahren zur Authentifizierung einer netzwerkverbundenen Vorrichtung nach Anspruch 8, wobei: (a) mindestens ein gegebener Authentifizierungsparameter der gegebenen Authentifizierungsparameter eine jeweilige Gruppe von erwarteten Werten aufweist, die auf Grundlage einer oder mehrerer Regeln zur Bestimmung erwarteter Werte berechnet wird, (b) das Vergleichen Berechnen des Abstands zwischen dem Authentifizierungswert des mindestens einen gegebenen Authentifizierungsparameters und der entsprechenden Gruppe von erwarteten Werten des mindestens einen gegebenen Authentifizierungsparameters beinhaltet und (c) die Referenzwerte des gegebenen Authentifizierungsparameters eine Vielzahl von Ablesungen beinhalten, die als Reaktion auf eine Vielzahl von vergangenen Abrufen von der gegebenen netzwerkverbundenen Vorrichtung erlangt wird, wobei die entsprechende Gruppe von erwarteten Werten auf Grundlage einer Vielzahl der Referenzwerte des gegebenen Authentifizierungsparameters berechnet wird.

13. Verfahren zur Authentifizierung einer netzwerkverbundenen Vorrichtung nach Anspruch 8, ferner umfassend: (a) Erlangen, durch die Verarbeitungsressource, einer Bildsignatur einer Authentifizierungsanwendung, die auf der gegebenen netzwerkverbundenen Vorrichtung installiert ist, und Verifizieren, dass die Bildsignatur mit einer Referenzbildsignatur identisch ist, die mit der Authentifizierungsanwendung assoziiert ist, und (b) Erlangen, durch die Verarbeitungsressource, einer Softwarestapelsignatur einer oder mehrerer Anwendungen, die auf der gegebenen netzwerkverbundenen Vorrichtung installiert sind, und Verifizieren, dass die Softwarestapelsignatur mit einer Referenzsoftwarestapelsignatur identisch ist, die mit der gegebenen netzwerkverbundenen Vorrichtung assoziiert ist.

14. Verfahren zur Authentifizierung einer netzwerkverbundenen Vorrichtung nach Anspruch 8, wobei: (a) mindestens einer der erwarteten Werte oder der erwarteten Wertebereiche oder der Gruppe von erwarteten Werten auf Grundlage einer statistischen Analyse einer Korrelation zwischen Referenzwerten von mindestens zwei der Authentifizierungsparameter berechnet wird und (b) mindestens einer der erwarteten Werte oder der erwarteten Wertebereiche oder der Gruppe von erwarteten Werten auf Grundlage einer statistischen Analyse einer Korrelation zwischen mindestens einem Referenzwert von mindestens einem der Authentifizierungsparameter und externen Daten berechnet wird, die von einer externen Informationsquelle erlangt werden, die eine andere als die netzwerkverbundenen Vorrichtungen ist und extern von dem System zur Authentifizierung einer netzwerkverbundenen Vorrichtung ist.

15. Nichttransitorisches computerlesbares Speichermedium, das computerlesbaren Programmcode aufweist, der damit verkörpert ist, wobei der computerlesbare Programmcode durch mindestens einen Prozessor eines Computers ausführbar ist, um ein Verfahren durchzuführen, umfassend:
Bereitstellen, durch eine Verarbeitungsressource, einer Vertragsdatenbank, die eine Vielzahl von authentifizierungsaktivierenden Informationsaufzeichnungen umfasst, wobei jede authentifizierungsaktivierende Informationsaufzeichnung einen Netzwerkzugriffsdeskriptor einer jeweiligen netzwerkverbundenen Vorrichtung und Referenzwerte von jeweiligen Authentifizierungsparametern der jeweiligen netzwerkverbundenen Vorrichtung enthält;
Erlangen, durch die Verarbeitungsressource, von einem Anforderer, einer Authentifizierungsanforderung, die einen gegebenen Netzwerkzugriffsdeskriptor beinhaltet, der mit einer gegebenen netzwerkverbundenen Vorrichtung assoziiert ist, die zu authentifizieren ist;
Abrufen, durch die Verarbeitungsressource, von der gegebenen netzwerkverbundenen Vorrichtung, unter Nutzung des gegebenen Netzwerkzugriffsdeskriptors, einer Vielzahl von Authentifizierungswerten, die durch Ablesen von aktuellen Werten der jeweiligen Authentifizierungsparameter der gegebenen netzwerkverbundenen Vorrichtung erlangt wird, wobei ein oder mehrere gegebene Authentifizierungsparameter der Authentifizierungsparameter einen dynamischen Wert aufweisen, der sich im Lauf der Zeit ändert, und wobei mindestens ein gegebener Authentifizierungswert der Authentifizierungswerte, der mit einem jeweiligen gegebenen Authentifizierungsparameter assoziiert ist, von einem Sensor erlangt wird, der mit der gegebenen netzwerkverbundenen Vorrichtung verbunden ist;
Berechnen, durch die Verarbeitungsressource, einer Authentifizierungseinstufung, die auf die Authentizität der gegebenen netzwerkverbundenen Vorrichtung hinweist, durch Vergleichen von jedem der Authentifizierungswerte mit einem jeweiligen erwarteten Wert oder erwarteten Wertebereich oder einer Gruppe von erwarteten Werten, die unter Nutzung der jeweiligen Referenzwerte bestimmt werden, wobei mindestens einer der Referenzwerte durch den Sensor erlangt worden ist, der mit der gegebenen netzwerkverbundenen Vorrichtung verbunden ist, bevor sein jeweiliger Authentifizierungswert von der gegebenen netzwerkverbundenen Vorrichtung erlangt wird, und wobei die Authentifizierungseinstufung von einem Abstand zwischen mindestens einem der erwarteten Werte und seinem jeweiligen Authentifizierungswert abhängt, wobei der Abstand durch eine Metrik in einem Funktionsraum gemessen wird; und
Senden, durch die Verarbeitungsressource, an den Anforderer, einer Authentifizierungsantwort.

## Revendications

1. Système d'authentification de dispositif connecté au réseau, le système d'authentification de dispositif connecté au réseau comprenant une ressource de traitement configurée pour :
fournir une base de données de contrats comprenant une pluralité d'enregistrements d'informations permettant l'authentification, chaque enregistrement d'informations permettant l'authentification contenant un descripteur d'accès au réseau d'un dispositif connecté au réseau respectif et des valeurs de référence de paramètres d'authentification respectifs du dispositif connecté au réseau respectif ;
obtenir, d'un demandeur, une requête d'authentification comportant un descripteur d'accès au réseau donné associé à un dispositif connecté au réseau donné à authentifier ;
récupérer, à partir du dispositif connecté au réseau donné, en utilisant le descripteur d'accès au réseau donné, une pluralité de valeurs d'authentification obtenues en lisant des valeurs actuelles des paramètres d'authentification respectifs du dispositif connecté au réseau donné, dans lequel un ou plusieurs paramètres d'authentification donnés des paramètres d'authentification a une valeur dynamique qui change dans le temps, et dans lequel au moins une valeur d'authentification donnée des valeurs d'authentification, associée à un paramètre d'authentification donné respectif, est obtenue à partir d'un capteur connecté au dispositif connecté au réseau donné ;
calculer un niveau d'authentification indicatif de l'authenticité du dispositif connecté au réseau donné en comparant chacune des valeurs d'authentification avec une valeur attendue respective, ou une plage de valeurs attendues, ou un groupe de valeurs attendues, déterminé en utilisant les valeurs de référence respectives, dans lequel au moins une des valeurs de référence a été obtenue par le capteur connecté au dispositif connecté au réseau donné avant d'obtenir sa valeur d'authentification respective à partir du dispositif connecté au réseau donné, et dans lequel le niveau d'authentification dépend d'une distance entre au moins une parmi les valeurs attendues et sa valeur d'authentification respective, la distance étant mesurée par une métrique dans un espace fonctionnel ; et
envoyer, au demandeur, une réponse d'authentification.

2. Système d'authentification de dispositif connecté au réseau selon la revendication 1, dans lequel la requête d'authentification est une requête d'autorisation d'une transaction impliquant le dispositif connecté au réseau donné et dans lequel la réponse d'authentification indique : (a) une autorisation de la transaction s'il est déterminé que le niveau est supérieur à un seuil, ou (b) un rejet de la transaction s'il est déterminé que le niveau est inférieur au seuil.

3. Système d'authentification de dispositif connecté au réseau selon la revendication 1, dans lequel : (a) au moins un paramètre d'authentification donné des paramètres d'authentification donnés a une valeur attendue correspondante calculée sur la base d'une ou plusieurs règles de détermination de valeur attendue, (b) la comparaison comporte le calcul de la distance entre la valeur d'authentification de l'au moins un paramètre d'authentification donné et la valeur attendue correspondante de l'au moins un paramètre d'authentification donné, et (c) les valeurs de référence du paramètre d'authentification donné comportent une pluralité de lectures obtenues en réponse à une pluralité de récupérations passées à partir du dispositif connecté au réseau donné, dans lequel la valeur attendue correspondante est calculée sur la base d'une pluralité des valeurs de référence du paramètre d'authentification donné.

4. Système d'authentification de dispositif connecté au réseau selon la revendication 1, dans lequel : (a) au moins un paramètre d'authentification donné des paramètres d'authentification donnés a une plage de valeurs attendues respective calculées sur la base d'une ou plusieurs règles de détermination de valeurs attendues (b) dans lequel la comparaison comporte le calcul de la distance entre la valeur d'authentification de l'au moins un paramètre d'authentification donné et la plage de valeurs attendues correspondante de l'au moins un paramètre d'authentification donné, et (c) les valeurs de référence du paramètre d'authentification donné comportent une pluralité de lectures obtenues en réponse à une pluralité de récupérations passées à partir du dispositif connecté au réseau donné, dans lequel la plage de valeurs attendues correspondante est calculée sur la base d'une pluralité des valeurs de référence du paramètre d'authentification donné.

5. Système d'authentification de dispositif connecté au réseau selon la revendication 1, dans lequel : (a) au moins un paramètre d'authentification donné des paramètres d'authentification donnés a un groupe respectif de valeurs attendues calculées sur la base d'une ou plusieurs règles de détermination de valeurs attendues, (b) dans lequel la comparaison comporte le calcul de la distance entre la valeur d'authentification de l'au moins un paramètre d'authentification donné et le groupe correspondant de valeurs attendues de l'au moins un paramètre d'authentification donné, et (c) les valeurs de référence du paramètre d'authentification donné comportent une pluralité de lectures obtenues en réponse à une pluralité de récupérations passées du dispositif connecté au réseau donné, dans lequel le groupe correspondant de valeurs attendues est calculé sur la base d'une pluralité des valeurs de référence du paramètre d'authentification donné.

6. Système d'authentification de dispositif connecté au réseau selon la revendication 1, dans lequel la ressource de traitement est en outre configurée pour : (a) obtenir une signature d'image d'une application d'authentification installée sur le dispositif connecté au réseau donné, et vérifier que la signature d'image est identique à une signature d'image de référence associée à l'application d'authentification, et (b) obtenir une signature de pile logicielle d'une ou plusieurs applications installées sur le dispositif connecté au réseau donné, et vérifier que la signature de pile logicielle est identique à une signature de pile logicielle de référence associée au dispositif connecté au réseau donné.

7. Système d'authentification de dispositif connecté au réseau selon la revendication 1, dans lequel : (a) au moins l'un parmi les valeurs attendues ou les plages de valeurs attendues ou le groupe de valeurs attendues est déterminé sur la base d'une analyse statistique d'une corrélation entre des valeurs de référence d'au moins deux des paramètres d'authentification, et (b) au moins un parmi les valeurs attendues ou les plages de valeurs attendues ou le groupe de valeurs attendues est déterminé sur la base d'une analyse statistique d'une corrélation entre au moins une valeur de référence d'au moins un des paramètres d'authentification et de données externes obtenues à partir d'une source d'informations externe autre que les dispositifs connectés au réseau et externes au système d'authentification de dispositif connecté au réseau.

8. Procédé d'authentification de dispositif connecté au réseau, le procédé d'authentification de dispositif connecté au réseau comprenant :
la fourniture, par une ressource de traitement, d'une base de données de contrats comprenant une pluralité d'enregistrements d'informations permettant l'authentification, chaque enregistrement d'informations permettant l'authentification contenant un descripteur d'accès au réseau d'un dispositif connecté au réseau respectif et des valeurs de référence de paramètres d'authentification respectifs du dispositif connecté au réseau respectif ;
l'obtention, par la ressource de traitement, à partir d'un demandeur, d'une requête d'authentification comportant un descripteur d'accès au réseau donné associé à un dispositif connecté au réseau donné à authentifier ;
la récupération, par la ressource de traitement, à partir du dispositif connecté au réseau donné, en utilisant le descripteur d'accès au réseau donné, d'une pluralité de valeurs d'authentification obtenues en lisant des valeurs actuelles des paramètres d'authentification respectifs du dispositif connecté au réseau donné, dans lequel un ou plusieurs paramètres d'authentification donnés des paramètres d'authentification a une valeur dynamique qui change dans le temps, et dans lequel au moins une valeur d'authentification donnée des valeurs d'authentification, associée à un paramètre d'authentification donné respectif, est obtenue à partir d'un capteur connecté au dispositif connecté au réseau donné ;
le calcul, par la ressource de traitement, d'un niveau d'authentification indiquant l'authenticité du dispositif connecté au réseau donné en comparant chacune des valeurs d'authentification avec une valeur attendue respective, ou une plage de valeurs attendues, ou un groupe de valeurs attendues, déterminé à l'aide des valeurs de référence respectives, dans lequel au moins une des valeurs de référence a été obtenue par le capteur connecté au dispositif connecté au réseau donné avant d'obtenir sa valeur d'authentification respective à partir du dispositif connecté au réseau donné, et dans lequel le niveau d'authentification dépend d'une distance entre au moins une parmi les valeurs attendues et sa valeur d'authentification respective, la distance étant mesurée par une métrique dans un espace fonctionnel ; et
l'envoi, par la ressource de traitement, au demandeur, d'une réponse d'authentification.

9. Procédé d'authentification de dispositif connecté au réseau selon la revendication 8, dans lequel la requête d'authentification est une requête d'autorisation d'une transaction impliquant le dispositif connecté au réseau donné et dans lequel la réponse d'authentification indique : (a) une autorisation de la transaction s'il est déterminé que le niveau est supérieur à un seuil, ou (b) un rejet de la transaction s'il est déterminé que le niveau est inférieur au seuil.

10. Procédé d'authentification de dispositif connecté au réseau selon la revendication 8, dans lequel : (a) au moins un paramètre d'authentification donné des paramètres d'authentification donnés a une valeur attendue correspondante calculée sur la base d'une ou plusieurs règles de détermination de valeur attendue, (b) la comparaison comporte le calcul de la distance entre la valeur d'authentification de l'au moins un paramètre d'authentification donné et la valeur attendue correspondante de l'au moins un paramètre d'authentification donné, et (c) les valeurs de référence du paramètre d'authentification donné comportent une pluralité de lectures obtenues en réponse à une pluralité de récupérations passées à partir du dispositif connecté au réseau donné, dans lequel la valeur attendue correspondante est calculée sur la base d'une pluralité des valeurs de référence du paramètre d'authentification donné.

11. Procédé d'authentification de dispositif connecté au réseau selon la revendication 8, dans lequel : (a) au moins un paramètre d'authentification donné des paramètres d'authentification donnés a une plage de valeurs attendues respective calculées sur la base d'une ou plusieurs règles de détermination de valeurs attendues, (b) la comparaison comporte le calcul de la distance entre la valeur d'authentification de l'au moins un paramètre d'authentification donné et la plage de valeurs attendues correspondante de l'au moins un paramètre d'authentification donné, et (c) les valeurs de référence du paramètre d'authentification donné comportent une pluralité de lectures obtenues en réponse à une pluralité de récupérations passées à partir du dispositif connecté au réseau donné, dans lequel la plage de valeurs attendues correspondante est calculée sur la base d'une pluralité des valeurs de référence du paramètre d'authentification donné.

12. Procédé d'authentification de dispositif connecté au réseau selon la revendication 8, dans lequel : (a) au moins un paramètre d'authentification donné des paramètres d'authentification donnés a un groupe respectif de valeurs attendues calculées sur la base d'une ou de plusieurs règles de détermination de valeurs attendues, (b) la comparaison comporte le calcul de la distance entre la valeur d'authentification de l'au moins un paramètre d'authentification donné et le groupe correspondant de valeurs attendues de l'au moins un paramètre d'authentification donné, et (c) les valeurs de référence du paramètre d'authentification donné comportent une pluralité de lectures obtenues en réponse à une pluralité de récupérations passées à partir du dispositif connecté au réseau donné, dans lequel le groupe correspondant de valeurs attendues est calculé sur la base d'une pluralité des valeurs de référence du paramètre d'authentification donné.

13. Procédé d'authentification de dispositif connecté au réseau selon la revendication 8, comprenant en outre : (a) l'obtention, par la ressource de traitement, d'une signature d'image d'une application d'authentification installée sur le dispositif connecté au réseau donné, et la vérification que la signature d'image est identique à une signature d'image de référence associée à l'application d'authentification, et (b) l'obtention , par la ressource de traitement, d'une signature de pile logicielle d'une ou plusieurs applications installées sur le dispositif connecté au réseau donné, et la vérification que la signature de pile logicielle est identique à une signature de pile logicielle de référence associée au dispositif connecté au réseau donné.

14. Procédé d'authentification de dispositif connecté au réseau selon la revendication 8, dans lequel : (a) au moins l'un parmi les valeurs attendues ou les plages de valeurs attendues ou le groupe de valeurs attendues est déterminé sur la base d'une analyse statistique d'une corrélation entre des valeurs de référence d'au moins deux des paramètres d'authentification, et (b) au moins un parmi les valeurs attendues ou les plages de valeurs attendues ou le groupe de valeurs attendues est déterminé sur la base d'une analyse statistique d'une corrélation entre au moins une valeur de référence d'au moins un des paramètres d'authentification et de données externes obtenues à partir d'une source d'informations externe autre que les dispositifs connectés au réseau et externes au système d'authentification de dispositif connecté au réseau.

15. Support de stockage non transitoire lisible par ordinateur ayant un code de programme lisible par ordinateur incorporé avec celui-ci, le code de programme lisible par ordinateur, exécutable par au moins un processeur d'un ordinateur pour exécuter un procédé comprenant :
la fourniture, par une ressource de traitement, d'une base de données de contrats comprenant une pluralité d'enregistrements d'informations permettant l'authentification, chaque enregistrement d'informations permettant l'authentification contenant un descripteur d'accès au réseau d'un dispositif connecté au réseau respectif et des valeurs de référence de paramètres d'authentification respectifs du dispositif connecté au réseau respectif ;
l'obtention, par la ressource de traitement, à partir d'un demandeur, d'une requête d'authentification comportant un descripteur d'accès au réseau donné associé à un dispositif connecté au réseau donné à authentifier ;
la récupération, par la ressource de traitement, à partir du dispositif connecté au réseau donné, en utilisant le descripteur d'accès au réseau donné, d'une pluralité de valeurs d'authentification obtenues en lisant des valeurs actuelles des paramètres d'authentification respectifs du dispositif connecté au réseau donné, dans lequel un ou plusieurs paramètres d'authentification donnés des paramètres d'authentification a une valeur dynamique qui change dans le temps, et dans lequel au moins une valeur d'authentification donnée des valeurs d'authentification, associée à un paramètre d'authentification donné respectif, est obtenue à partir d'un capteur connecté au dispositif connecté au réseau donné ;
le calcul, par la ressource de traitement, d'un niveau d'authentification indiquant l'authenticité du dispositif connecté au réseau donné en comparant chacune des valeurs d'authentification avec une valeur attendue respective, ou une plage de valeurs attendues, ou un groupe de valeurs attendues, déterminé à l'aide des valeurs de référence respectives, dans lequel au moins une des valeurs de référence a été obtenue par le capteur connecté au dispositif connecté au réseau donné avant d'obtenir sa valeur d'authentification respective à partir du dispositif connecté au réseau donné, et dans lequel le niveau d'authentification dépend d'une distance entre au moins une des valeurs attendues et sa valeur d'authentification respective, la distance étant mesurée par une métrique dans un espace fonctionnel ; et
l'envoi, par la ressource de traitement, au demandeur, d'une réponse d'authentification.
